Europäisches Patentamt

European Patent Office

Office européen des brevets

(11) Publication number: **0 221 741**
**A2**

## EUROPEAN PATENT APPLICATION

(21) Application number: **86308295.4**

(22) Date of filing: **24.10.86**

(51) Int. Cl.⁴: **G 06 F 9/26**
**G 06 F 9/40**

(30) Priority: **01.11.85 US 794194**

(43) Date of publication of application:
**13.05.87 Bulletin 87/20**

(84) Designated Contracting States:
**AT BE CH DE ES FR GB GR IT LI LU NL SE**

(71) Applicant: **ADVANCED MICRO DEVICES, INC.**
**901 Thompson Place P.O. Box 3453**
**Sunnyvale, CA 94088 (US)**

(72) Inventor: **Wang, Bu Chin**
**12231 Kirkdale Drive**
**Saratoga California 95070 (US)**

**Parikh, Dakshesh**
**3289 Terra Cotta Drive**
**San Jose California 95132 (US)**

**Daly, Marita**
**3233 Santa Clara Ave., No. 2**
**El Cerrito California 94530 (US)**

(74) Representative: **Sanders, Peter Colin Christopher et al**
**BROOKES & MARTIN High Holborn House 52/54 High**
**Holborn**
**London WC1V 6SE (GB)**

(54) **Computer microsequencers.**

(57) A microsequencer suitable for use in real time data processing computer applications is described. The microsequencer permits the utilization of a wide variety of program execution control structures, such as multiply-nested iterative looping, subroutine calls, branching multiple-interrupt servicing, all in a manner that is both instruction code and execution speed efficient. This is a accomplished by providing a microsequencer for producing execution point addresses in the execution of a program including nested program segments of one or more program instructions, the microsequencer comprising sequencer means for generating successive execution point addresses, the sequencer means including branch control means for providing a branch address to the sequencer means as a generated execution point address, the branch control means being responsive to a condition input, and nest control means, responsive to the sequencer means, for detecting changes in the effective segment nest level of the execution point address and for providing a corresponding condition input to the branch control means.

EP 0 221 741 A2

## Description

COMPUTER MICROSEQUENCERS

The present invention is generally related to computer instruction selection and control units typically referred to as microsequencers and, in particular, to microsequencers optimally adapted for use in real time and digital signal processing computer applications.

An exemplary real time computer application is digital signal processing. There, a typically specialized digital signal processor (DSP) is utilized to perform, digitally, signal analysis or generation in a characteristically continuous time constrained process. Specific examples of digital signal processing applications include digital modulation/demodulation, speech recognition and complex digital filtering. As this suggests, real time processors are required to perform often quite complex digital transformations and calculations while maintaining a throughput rate at least equal to the maximum rate of data provided to the real time processor. In digital signal processing of analog signals, the digital sampling rate of the modem data, speech or a noise-infused signal, depending on the particular application of the processor, establishes the maximum data rate. A performance premium is therefore placed on execution speed and code efficiency in the operation of real time processors.

Typically, the real time digital processing of data is controlled within, for example, a digital signal processor by a function appropriate control program. Generally, the program is composed of instruction codes that define the programmed process to be performed on the real time data. At least in the early real time digital signal processors, the real time processing programs were realized as simple inline instruction code programs. That is, the conventional programming feature of permitting subroutine calls for the non-inline processing of data in accordance with a non-inline sequence of instruction codes, or program segment, was sacrificed. Also sacrificed was the ability to handle interrupt conditions and, to a lesser degree perhaps, the ability to iteratively perform loop execution of program segments. These features were sacrificed apparently due to their instruction code inefficiency, as well as collateral negative impact on real time processing data integrity and the use of execution speed enhancement techniques, such as instruction execution pipelining.

Code inefficiency generally refers to the use of instruction codes for management of, for example, an iterative program segment loop. Such loop management codes do not directly perform any digital processing of real time data. This is significant since, in order to perform digital processing in real time, the instruction code store is generally of limited capacity to optimize its access speed. The greater the number of program management instruction codes utilized, the lessor the amount of digital processing can be performed for any given instruction store capacity. Additionally, as the digital processing input performed by the program must match the real time data throughput, the repeated execution of program management instruction codes proportionally decreases the amount of time available to perform the necessary digital processing. Consequently, the design decisions associated with the early digital signal processors were, again apparently, to do away with the execution overhead and code inefficiency associated with iterative loops, subroutine calls and interrupt servicing. This also conveniently did away with the collateral problems of preserving any then current relevant information to permit continuing program execution following the completion of a subroutine call or the servicing of an interrupt; the retention of such information being required in order to preserve the integrity of program execution and, thereby, the integrity of the data being processed.

In the present specification there is described a microsequencer suitable for use in real time data processing computer applications that permits the utilization of a wide variety of program execution control structures, such as multiply-nested iterative looping, subroutine calls, branching, multiple-interrupt servicing and combinations thereof, all in a manner that is both instruction code and execution speed efficient while maintaining data integrity.

This is a accomplished by providing a microsequencer for producing execution point addresses in the execution of a program including nested program segments of one or more program instructions, the microsequencer comprising sequencer means for generating successive execution point addresses, the sequencer means including branch control means for providing a branch address to the sequencer means as a generated execution point address, the branch control means being responsive to a condition input, and nest control means, responsive to the sequencer means, for detecting changes in the effective segment nest level of the execution point address and for providing a corresponding condition input to the branch control means.

The microsequencer may also include first stack means, responsive to the sequencer means, for storing branch instruction addresses pointers and data, and second stack means, responsive to the next control means, for storing data corresponding to the effective segment nest level of the execution point address. Also provided is means for determining the absolute segment nest level of the execution point address so as to permit detection of impending or actual overflow of the first and second stack means.

Thus, a microsequencer is provided for the efficient execution of multiply-nested loops requiring no end-of-loop code usage in the performance of overhead free iterative looping.

One advantage of this microsequencer is that it provides for interrupted servicing from all nested loop program segments as well as providing for subroutine program segment calls that may further require execution of nested loops and interrupted servicing.

A second advantage is that it detects branch out-of-loop conditions for nested loop parameter restoration as may be appropriate for the destination of the branch out-of-loop.

A third advantage is that it provides for detection of multiple iteration, single instruction loop execution.

A fourth advantage is that is provides for the execution of program loops conditional on a data-dependent iteration count value.

A fifth advantage is that it provides absolute nesting depth control so as to provide stack overflow detection.

A sixth advantage is that it provides the basis for extensive instruction set microsequencer capabilities that are readily adapted to pipeline oriented execution yet is generally otherwise independent of the internal system architecture associated with the microsequencer.

In the accompanying drawings, by way of example only:-

Fig. 1 is a simplified block diagram of a microsequencer architecture, including instruction store and decoder;

Fig. 2 is a simple block diagram of a digital signal processor; and

Fig. 3 provides a detailed block diagram of a microsequencer program control logic system instructed according to a preferred embodiment of the present invention.

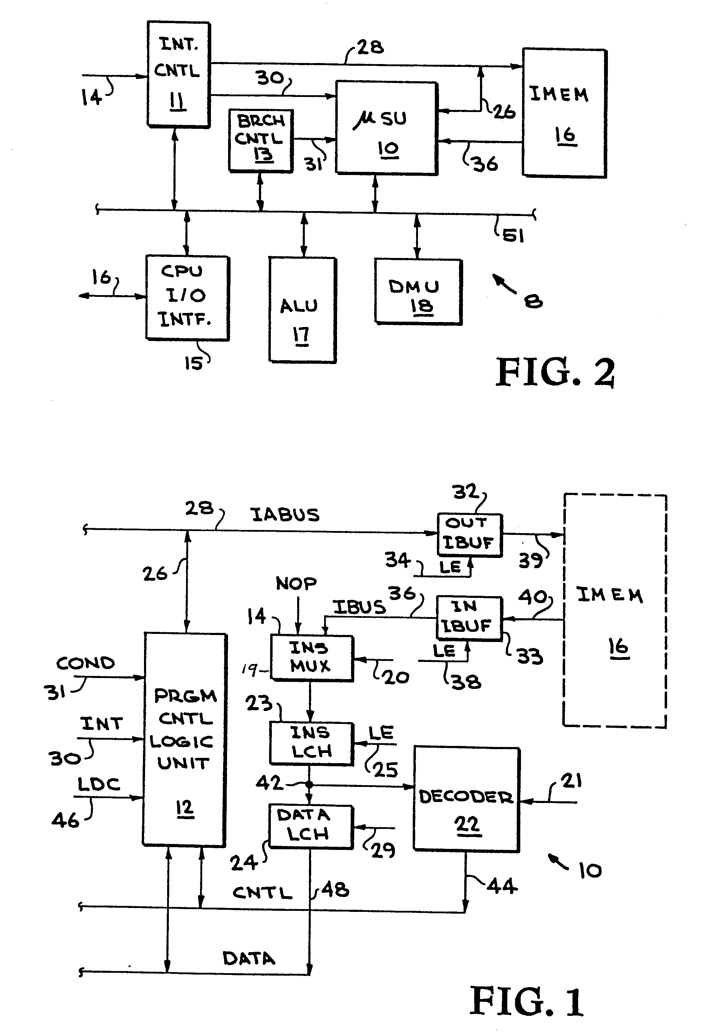

A microsequencer, generally indicated by the reference numeral 10, is shown in Fig. 1. The microsequencer 10 is incorporated in this example of the invention as part of a digital signal processor (DSP) 8, generally as shown in Fig. 2, implemented utilizing a CMOS integrated circuit technology to provide a single chip integrated circuit. Further, in this example, the microsequencer 10 is implemented along with an arithmatic logic unit (ALU) 17, a data memory or external data store interface unit (DMU) 18, CPU and input/output interface 15 and an interrupted controller (INT CNTL) 11, all interconnected by a bus 51. An interface to an external instruction memory storage unit (IMEM) 16 is also preferably provided closely associated with the microsequencer 10, though the instruction store 16 could be readily implemented as an integral part of the digital signal processor 8. In either case, the instruction storage unit 16 is included or closely associated with the digital signal processor 8 to store a program that defines the functional operation of the digital signal processor 8. The program may be viewed as a collection of instructions stored at corresponding instruction addresses. The overall program function is directly defined by the specific organization of the instructions since the instructions are interrelated by the function that will be performed by the digital signal processor 8 in response to their specifically ordered execution.

Preferably, instructions defined for directing the functional operation of the digital signal processor 8 include jump or branch to a new instruction execution point address (JUMP), call a subroutine (CALL), return from a subroutine (RET), and perform an iterative loop (LOOP). The execution sequence management of a program by these instructions, as permitted by the present invention and described below in greater detail, permits the implementation of complex programming structures in the efficient realization of programs that functionally define the operation of the digital signal processor.

Further, the present invention permits the utilization of these programming structures while the digital signal processor 8 operates subject to the occurrence of interrupts. An interrupt may be triggered due to the occurrence of an external event, by provision of a corresponding signal on interrupt line 14, or an event internal to the digital signal processor, such as the expiration of a preprogrammed timed period. The occurrence of an interrupt obtains the functional response generally equivalent to the execution of a CALL instruction. This allows the digital signal processor to effectively deal with the occurrence of an interrupt by the immediate execution of an interrupt service routine analogous to a CALL instruction subroutine. Accordingly, the interrupt controller 11 is preferably capable of identifying the source of the interrupt and providing an interrupt vector instruction address corresponding to the appropriate interrupt service routine.

As will also be described in greater detail below, the present invention preferably provides for overhead free iteratively looped execution of fully-nested program segments. That is, the present the invention provides hardware loop control in the execution of program segments containing one or more program instructions. With limited exception, the present invention places little restriction on the particular nature of these segment instructions. In particular, a segment may include other CALL, LOOP, JUMP and RET instructions and be executed subject to the random occurrence of an interrupting event.

Also in the preferred embodiments of the present invention, the operation of the microsequencer 10 is synchronized with a conventional two-phase clock. Preferably, the circuitry of the preferred embodiments is clock transition edge sensitive and, for convenience of discussion, control signals that occur synchronous with a clock phase edge transition will occur with the training edge of the phase signal unless noted otherwise. However, control signals provided to level sensitive control inputs will occur shortly following the leading phase edge transition and remain valid for the duration of the phase.

The principal components of the microsequencer 10, as shown in Fig. 1, include the program control logic unit 12, an instruction decoder 22 and an instruction data latch 24. Together these components permit the substantially-closed loop cycling of fetching, decoding and executing program instructions, preferably in respective clock cycles of a pipelined mode of operation. To this end, the program control unit 12 sequentially provides instruction addresses to an instruction memory buffer 32, 33, resulting in the return of a corresponding sequence of instructions. These instructions are each sequentially presented to the decoder 22. decoded and provided onto a digital signal processor control bus 50. While much of the decoded instruction is utilized to control and operate other sections of the digital signal processor 8, part is returned to the program control unit 12 as a basis for determining the next instruction address to be generated. Additionally, a portion of the instruction may be provided onto a digital signal processor data bus 52 and subsequently used as a basis for the selection of the next instruction address. Other contributing basis for the selection of the next instruction address include data and status condition signals produced or obtained through the operation of other portions of the digital signal processor. Preferably, such status signals are collected and evaluated by a branch control unit (BRCH CNTL) 13 of the digital signal processor 8. The evaluation performed will have been specified by the decoded instruction, thereby permitting the branch control unit 13 to provide the microsequencer 10 with a single boolean condition control signal on a line 31.

Considering the microsequencer 10 of Fig. 1 in greater detail, an instruction address, preferably generated during a preceding clock cycle by the program control logic unit 12, is provided via the program control bus (PCBUS) 26 to the instruction address bus (IABUS) 28 at the initiation of an instruction fetch cycle. Preferably, a control signal synchronous with the leading edge of the fetch cycle/$\varphi_1$ phase, as provided on a control line 40 to an instruction address out buffer 34, latches the instruction address onto the instruction address lines 39. An instruction memory (IMEM) 16 is provided as the instruction store. The particular instruction referenced by the instruction address is returned by the instruction memory store 16 via instruction return lines 40. A leading edge synchronous fetch cycle/$\varphi_2$ phase control signal, preferably provided on a control line 38, latches the addressed instruction into an instruction in buffer 33 and thereby onto the instruction bus (IBUS) 36. An instruction multiplexer 19 selects between the fetched instruction and a substitute no operation (NOP) instruction in response to an instruction cycle/$\varphi_2$ phase control signal provided on a level sensitive select control line 20. A control signal synchronous with the leading edge of the immediately following decode cycle/$\varphi_1$ phase latches the instruction into an instruction latch 23. From there the instruction is provided on an instruction latch bus 42 to the decoder 22 and data latch 24. The decoder 22 preferably includes a programmable logic array having at least one set of output lines 44 provided to the control bus 50. The decoded instruction is provided onto the output lines 44 and subsequently latched in response to a decode cycle/$\varphi_1$ phase control signal on control line 36. Thus, level sensitive control signal inputs, such as a loop disable control (LDC) input, provided to the program to the program control logic unit 12 on a control line 46, are set up prior to the trailing edge of the decode cycle/$\varphi_1$ phase. An instruction sub-field is also latched from the instruction latch bus 42 into the data latch 24 in response to a decode cycle/$\varphi_2$ control signal at the conclusion of the decode cycle. Latching of the instruction sub-field into the data latch 24 results in the sub-field being provided on the data bus 52 via the data latch output lines 48 for use in subsequent execution cycles.

An alternate source of an instruction addresses is the interrupt controller 11, as shown in Fig. 2. Upon occurrence of either an internal or external interrupt, an interrupt signal (INT) is provided on a control line 30 to the program control logic unit 12. At the leading edge of the next fetch cycle/$\varphi_1$ phase, the interrupt controller provides its interrupt vector instruction address, corresponding to the particular interrupt that occurred, onto the instruction address bus 28 to the exclusion of any instruction address generated by the program control logic unit 12. Instead, the program control logic 12 receives the interrupt vector via its PCBUS 26 for its immediate use in providing subsequent successive instruction addresses of the interrupt service routine.

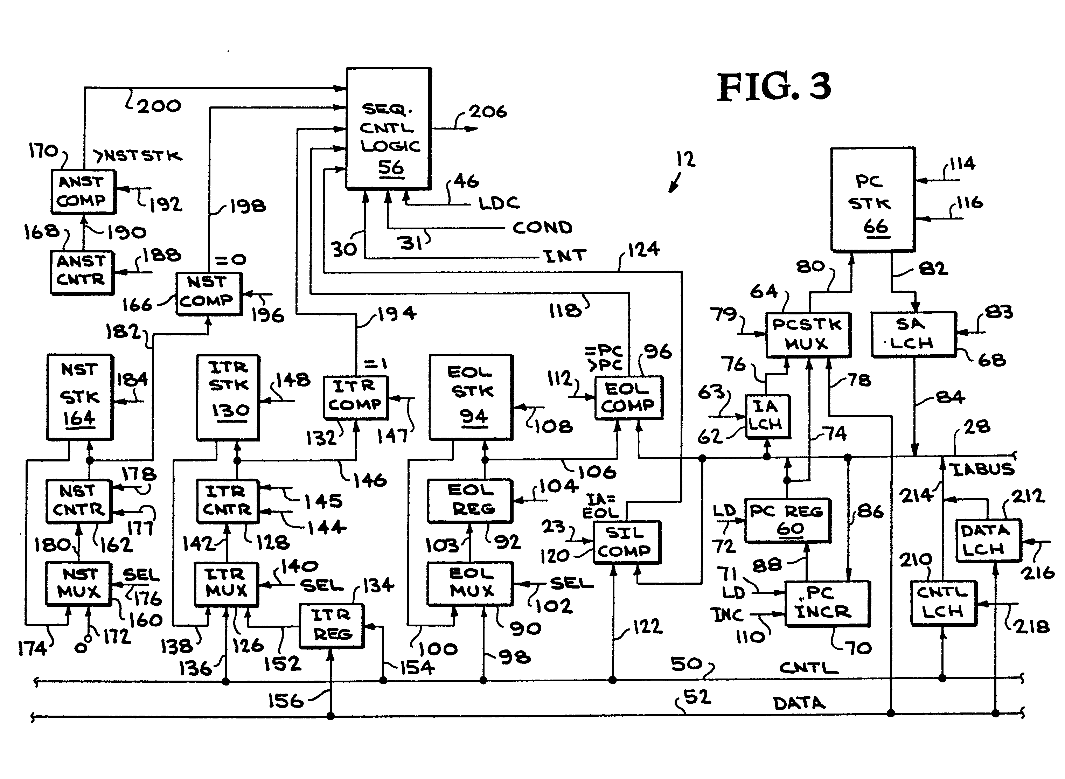

Fig. 3 provides a detailed block diagram of the program control logic unit 12. The principal component of the program control logic unit 12 is a sequence control logic block 56 which receives the interrupt, condition and loop disable control signals respectively on control lines 30, 31, 46. The sequence control logic block also receives several control signals as generated by the remaining blocks of the program control logic unit 12. From this, the sequence control logic block 56 generates further control signals that are provided back to the other blocks via the collective control lines 206. The particular control signals provided will be described from the perspective of their operative causation and their resulting effect as illustrated in review of instruction execution in several program structures.

I. In-Line Sequential Execution

Most data processing program instructions have no direct effect on the sequential generation of instruction addresses by the program control logic unit 12. In such cases, a sequentially incremented instruction address is typically provided on the IABUS 28 at the beginning and for the duration of each instruction fetch cycle by the operation of a PC address incrementor 70 and PC register 60. The instruction address currently present on the IA bus 28 is loaded into the PC address incrementor 70 via the bus extension 86 in response to a fetch cycle/$\varphi_1$ phase control signal provided on control line 71. An address increment fetch cycle/$\varphi_2$ phase control signal and a load fetch cycle/$\varphi_2$ phase control signal, provided on level and edge sensitive control lines 110, 72 respectively, result in the incremented instruction addressed being latched into the PC register 60 and onto the IABUS 28 coincident with the beginning of the next pipelined instruction fetch cycle. Thus, the inline sequencing and execution of instructions is obtained.

II. Loop Execution

The provision of an end-of-loop pointer register 92, loop iteration counter 128, loop nest level counter 162 and their respective stacks 94, 130, 164 permit the multiple nested, iteratively looped execution of program segments. As before, a program segment may include one or more program instructions to perform some particular function. The use of a loop program control structure permits, for example, a procedure to be repetitively performed by reexecuting the corresponding program segment. In accordance with the present invention, a LOOP instruction, when decoded, specifies the length of the loop program segment, preferably in terms of its ending address though alternately by the number of instructions within the segment, and the number of iterations of the program segment loop that are to be performed. A preferred variant of the LOOP instruction permits a data dependant iteration count value, either provided directly through the execution of a previous instruction or generated by another section of the digital signal processor in response to the execution of one or more previous instructions, to be utilized to indirectly specify the number of program segment loop iterations to be performed.

A. Direct, Single, Overhead Free Loop

Following the fetch of a simple or direct LOOP instruction, the sequence control logic block 56 provides a decode cycle/$\varphi_2$ phase control signal on a level sensitive control line 102 of an end-of-loop multiplexer (EOLMUX) 90. At the same time, the end-of-loop instruction address is present on the control bus 50 from the instruction decoder 22. The end-of-loop multiplexer 90 is selected by the control signal on line 102 to pass the ending instruction address via lines 98 and 102 to the end-of-loop register 92. There, the end-of-loop instruction address is latched onto the ending instruction address bus 106 in response to a decode cycle/$\varphi_2$ phase control signal provided on control line 104. An end-of-loop address comparator 96 is provided to compare the ending loop address so provided with the instruction address then present on the IABUS 28.

Depending on the results of the address comparison, as enabled by the provision of a decode cycle/$\varphi_1$ phase control signal provided on a control line 112, the end-of-loop comparator 96 selectively provides control signals on compariter output lines 118 indicating that the end-of-loop address is either equal to the current instruction address or greater than the current instruction address. Provision of these control signals to the sequence control logic block 56 directly permits the determination of whether instruction execution is within the current loop program segment, at the end of the segment or whether a branch-out-of-loop has occurred.

In accordance with the present invention, the iteration count value is also provided by the decoder 22 on the control bus 50 simultaneous with the end-of-loop instruction address. The iteration count value is selected by the iteration multiplexer (ITR MUX) from the appropriate line 136 of the control bus 50 in response to a decode cycle/$\varphi_1$ iteration count source select signal provided on a level sensitive control line 140. An iteration counter (ITR CNTR) 128 latches in the selected iteration count value from the iteration multiplexer lines 142 in response to a decode cycle/$\varphi_2$ iteration count value load control signal provided on control line 144. The latched iteration count value is provided by the iteration counter 128 onto its output lines 146 to an iteration compariter 132. The iteration compariter 132 is preferably set to detect an iteration count equal to 1 when enabled by a decode cycle/$\varphi_1$ phase last-iteration control signal. This last-iteration control signal is provided on iteration compariter output line 194 to the sequence control logic block 56.

In addition to directly specifying both the end-of-loop instruction address and the number of iterations to be performed, the execution of a loop instruction causes the then current instruction address present on the IABUS 28 to be latched into a instruction latch 62 in response to a decode cycle/$\varphi_1$ latch control signal. This latched instruction address corresponds to the instruction immediately following the direct loop instruction and, in accordance with the present invention, is the beginning-of-loop instruction address. This instruction address is selected by the PC stack multiplexer 64 in response to a decode cycle $\varphi_2$ control signal provided on the level sensitive select line 79 and, thereby, provided on the PC stack multiplexer output line 80. A decode cycle/$\varphi_2$ push control signal is preferably provided on control line 116 to a PC stack register 66, organized as a LIFO buffer, temporarily stores the beginning-of-loop instruction address in the first position thereof. Pushing of the beginning-of-loop instruction address onto the PC stack 66, however, does not affect the decoding and execution of the beginning-of-loop instruction and, in general, the instructions that follow.

In accordance with the present invention, a current program segment relative nest level counter 162 is incremented in response to the execution of a loop instruction. A decode cycle $\varphi_2$ increment control signal is preferably provided on a control line 178 to the nest counter 162. The resulting nest level count value is provided on the nest counter output line 182 to a current program segment relative nest level compariter (NSTCOMP) 166. This permits the nest level compariter to provide a loop-in-progress control signal on line 198, as the result of comparing the current nest level with a predetermined value, preferably 0, in response to a decode cycle $\varphi_1$ comparison enable control signal on control line 196.

Once a loop is setup as described, the program control logic unit 12 then generally proceeds to sequentially execute the instructions of the loop program segment. The sequence control logic block 56 tests the status of the end-of-loop/out-of-loop, last-iteration and loop-in-progress signals provided on the control lines 118, 194, 198, respectively, to determine whether loop management is required. That is, absence of the loop-in-progress signal on control line 198 forces the sequence control logic block 56 to ignore the last iteration and end-of-loop/out-of-loop control signals provided on lines 194, 118. However, execution of the loop instruction will have caused the loop-in-progress signal to be provided on line 198. The absence of the last-iteration control signal on line 194 in combination with a end-of-loop control signal on one of the lines 118 will cause the sequence control block 56 to restart execution of the loop program segment at the beginning-of-loop instruction address. This is accomplished by the provision of a fetch cycle/$\varphi_1$ copy control signal on control line 114 to the PC stack 66. This causes the instruction address present on the top of the PC stack 66, i.e., the last instruction address pushed onto the PC stack 66, to be provided on the stack output lines 82 without adjusting the current top of stack. During fetch cycle/$\varphi_2$ of the last loop program segment instruction, a stack address branch control signal is provided to the stack address latch 68 to latch the beginning-of-loop instruction address onto the IABUS 28 via lines 84. The corresponding load control signal nominally provided on control line 72 to load and enable the program counter register 60 is appropriately withheld. Finally, a fetch cycle/$\varphi_2$ control signal is provided to the iteration counter 128 via decrement control line 144 to adjust the iteration count value to properly reflect the remaining number of iterations to be performed. Since the beginning-of-loop instruction address is provided by the stack address latch 68 on the IABUS 28 during the execution decode cycle of the last loop program segment instruction, the corresponding beginning-of-loop instruction will be fetched for subsequent decoding and execution. As with the execution of in-line instructions, the instruction cycle/$\varphi_1$ load control signal is provided to the program counter incrementor 70 via control line 71. Thus, the beginning of loop instruction address from the stack address latch 68 is effectively utilized as the basis for the next instruction address to be provided by the program counter register 60. Consequently, iterative loop program segment execution is obtained.

During the last iteration fetch cycle of the last loop program segment instruction, the sequence control logic block 56 will receive the loop-in-progress, last-iteration and end-of-loop control signals from the nest level compariter 166, iteration compariter 132 and end-of-loop compariter 96. In response, the sequence control logic block 56 provides a instruction cycle/$\varphi_2$ phase pop control signal to the PC stack 66 via push/pop control line 116, thereby causing the beginning of loop instruction address to be effectively dumped from the top-of-stack position. Additionally, an instruction cycle/$\varphi_2$ nest level decrement signal is provided on the increment/decrement control line 178 of the nest level counter 162. This causes the nest level count value to properly reflect the current program segment relative nest level. As only a single loop instruction has been executed to effect the count value of the nest level counter 162, the resulting zero count value appropriately reflects that the program control logic unit 12 will be subsequently sequencing simple in-line instructions. Consequently, to the extent described above, the present invention permits the execution of overhead free, non-nested direct loops.

B. Multiply-nested, Direct, Overhead Free Loops

In accordance with the present invention, an end-of-loop instruction address stack 94, iteration count stack 130 and nest level stack 164 are provided to permit the execution of nested loop program segments. In one preferred embodiment, an absolute nest level counter 168 and compariter 170 are provided to permit direct detection of loss of program data integrity or, alternately, impending loss. For purposes of the present invention, a nested loop occurs whenever a loop instruction and its specified end-of-loop instruction address are present within a loop program segment of another. The present invention directly provides for the preservation of the beginning of loop instruction address, end-of-loop instruction address and the iteration count value of a potential previously executed loop instruction whenever any loop instruction is executed. Accordingly, decode cycle/$\varphi_2$ phase push control signals are provided to the end-of-loop instruction address 94, via the push/pop control line 108, and the iteration count stack 130, via push/pop control line 148. This results in the LIFO storage of a previous end-of-loop LOOP instruction address and current corresponding iteration count value simultaneous with the pushing of the new beginning-of-loop instruction address onto the PC stack 66. A previous loop instruction beginning-of-loop instruction address is therefore pushed deeper into the PC stack 66 without loss. Finally, the current program segment relative nest level count value is incremented by the provision of a decode cycle/$\varphi_2$ increment control signal on the control line 178 of the nest level counter 162.

The iterative execution of the inner loop proceeds as before until completion of its final iteration. The sequence control logic block 58 directs the resumption of the outer loop by restoring the corresponding end-of-loop instruction address and iteration count values to the end-of-loop instruction address register 92 and iteration counter 128. That is, during the execution of the last instruction of the inner loop, the sequence control logic block 56 provides a decode cycle/$\varphi_2$ select signal to the end-of-loop multiplexer 90, via the level sensitive control line 102, and a pop control signal on the push/pop control line 108 of the end-of-loop stack 94, thereby returning the outer looper end-of-loop instruction address via lines 100 to the end-of-loop multiplexer 90. Simultaneously, a decode cycle/$\varphi_2$ pop control signal is provided to the iteration stack 130 via push/pop control line 148 so as to provide the previous loop iteration count value on the iteration stack output lines 138 to the iteration multiplexer 126 and, as selected by the provision of the select control signal on level sensitive control line 140, onto the iteration multiplexer output lines 142. Both the previous loop end-of-loop instruction address and iteration count value are respectively latched into end-of-loop register 92 and interation counter 128 in response to respective decode cycle/$\varphi_2$ load control signals. Consequently, immediately prior to the decode cycle of the first instruction following the last instruction of a nested loop program segment, all loop program structure management relevant information is restored.

From the foregoing, the present invention clearly provides for the performance of a multiply-nested program loops in an overhead free execution manner. The maximum number of loops that may be nested without loss of data integrity is determined by the depth of the PC, end-of-loop, and iteration stacks 66, 94, 130. Should the execution of a loop instruction result in the pushing of an otherwise valid beginning-of-loop instruction address, end-of-loop instruction address and iteration count value off of the bottom of their respective stacks, thereby causing the loss of the corresponding program structure management data, the integrity of the program sequence and the data correspondingly processed thereby will have been compromised if not entirely lost. Accordingly, the present invention provides the absolute nest level counter 168 and an absolute nest level compariter 170. Preferably the absolute nest counter 168 is provided with a count value of zero upon initialization of the program-control logic unit 12 in response, for example, to a reset of the entire digital signal processor. In general, the count value maintained by the absolute nest level counter 168 is incremented and decremented in response to the initiation and completion of each nested loop. That is, the execution of a LOOP instruction results in a decode cycle/$\varphi_2$ increment control signal to be provided on control line 188 to the absolute nest level counter 168 while completion of the last iteration of a loop program segment results in the provision of a decode cycle/$\varphi_2$ decrement control singal being provided. The absolute nest level count value is provided by the counter 168 via its output lines 190 to the absolute nest level compariter 170 for comparison against a predetermined value corresponding to the maximum nesting level that can be managed without loss of data integrity. Generally, this is the lesser of the stack depths of the PC, end-of-loop and iteration stacks. The depth of the program segment relative nest level stack 164, to be described in greater detail below, is a similarly limiting factor.

The results of the comparison is provided on the compariter output line 200 to the sequence control logic block 56 and preferably ultimately to the user interface 16 of the digital signal processor 8. Alternately, the signal provided by the absolute nest level compariter 170 may be utilized to force an interlock to suspend subsequent recognition of interrupts, for example, when the absolute nest level count equals the maximum nest level or, when the count exceeds the maximum nest level, to force an internal reinitialization of the program control logic unit 12 or the execution of a program integrity recovery program segment.

An alternate structure to the absolute nest level counter 168 and compariter 170 is the use of a shift register to perform essentially the same function. The length of the shift register is preferably the same or, alternately, one less than the stack depths of the end-of-loop 94, iteration 130 and program segment relative nest stack 164. One end of the shift register is provided with a data one and a shift up/down signal, essentially the same as the counter increment. Increment signal of line 188, and the opposite end is connected to the output line 200. Consequently, a shift up signal is provided with the initiation of each loop while a shift down signal is provided at the completion of each loop. Propagation of the data one through the entire shift register effectively indicates that the maximum net level of the stacks 94, 130, 164 is or, alternately, is about to be exceeded with a corresponding loss of integrity.

C. Indirect Loop

As noted above, the present invention permits a data dependent iteration count value to be obtained and utilized in the execution of a loop instruction. The present invention provides an iteration register 134 for the temporary storage of the data-dependent iteration count value. This value may be produced through the execution of any one or more instructions prior to execution of the data-dependent loop instruction. The data-dependent iteration value is preferably provided from the data bus 52 onto the input lines 156 of the iteration register 134 where it is latched in response to a control signal provided from the control bus 50 onto the control line 154 of the iteration register 134. The resulting iteration count value is provided on the iteration register output lines 152 to the iteration multiplexer 126 where it is available for selection in response to a decode cycle/$\varphi_2$ select signal provided on the level sensitive control line 140. The data-dependent count value is therefore available to be latched into the interation counter 128 in response to the decode cycle/$\varphi_2$ load control signal provided on the load control line 144.

D. Single Instruction Loop

In accordance with the present invention a single instruction loop program structure is permitted utilizing only a single LOOP instruction to establish management of the loop and a single data processing loop program segment instruction. In accordance with a preferred embodiment of the present invention, a unique loop instruction is utilized to pre-specify the single instruction program segment nature of the loop management being invoked. That is, in the $\varphi_1$ phase of the loop instruction decode cycle the decoder 22 decodes the unique LOOP instruction and, in addition to initializing the loop, provides a single-instruction loop-in-progress control signal to the program control logic unit 12. The sequence control logic block 56 accordingly provides the necessary control signals to provide the beginning of loop instruction from the PC stack 66 to the IABUS 28 during the next instruction fetch cycle. Since the decoding of the single instruction loop instruction occurs concurrently with a pipe-lined instruction fetch cycle, the single-instruction loop-in-progress control signal is preferably further provided on the level sensitive instruction multiplexer select control line 20 of Fig. 2 to force the selection of a no operation (NOP) instruction during what would otherwise be the first execution of the single instruction loop instruction while preventing the update of the PC register 60 during the execution of the decode cycle/$\varphi_2$ phase of the unique single instruction loop. Since the instruction of the single instruction loop is determined by the end-of-loop compariter 96 to be the last loop instruction during the decode cycle of the initial no operation instruction and each instruction thereafter for the duration of the loop, the beginning-of-loop address is repeatedly read from the PC stack 66 during each loop instruction fetch cycle. Consequently, the first iterative execution of the single instruction loop is delayed by a single instruction cycle to set up the loop management, but thereafter completes consistent with all loops. However, the full overhead free loop management manner of operating is been retained. Thus, the single instruction cycle delay added is a minor trade off.

An alternate embodiment of the present invention is contemplated to obviate the need to execute the initial NOP instruction. This is accomplished by the program control logic unit 12 again preventing the update of the PC register 60 during the execution of the decode cycle/$\varphi_2$ phase of the unique single-instruction-loop instruction and a once decremented iteration count value is stored in the iteration counter 128. This allows the end-of-loop compariter 96 to be tested effectively prior to the change in the PC register value for the next instruction. Since this comparison yields a result that indicates end-of-loop, the PC register 60 will be loaded from the top of the PC stack 66. The once frozen PC register therefore causes the instruction of the single-instruction-loop to be fetched and executed during the next instruction cycle. The PC register 160 is then freed to be updated. from the PC incrementator 70. However, since the instruction of the single-instruction-loop is executed once before the loop management is fully set up, the count value is preferably decremented by one prior to loading into the iteration counter 128. Thus, the single-instruction-loop execution will again complete consistent will all loops.

Another alternate embodiment of the present invention is contemplated to obtain the full overhead free execution of single instruction loops without utilizing a unique single instruction loop instruction or requiring the execution of an initial no operation instruction. This is accomplished by the provision of a single instruction loop compariter 120 coupled to the IABUS 28 for receiving the current instruction address and to the control bus 50 for receiving the end-of-loop instruction address as specified as part of the LOOP instruction. The single-instruction-loop compariter 120 provides a single instruction loop-in-progress control signal on its output line 124 in response to a single instruction loop decode cycle/$\varphi_1$ comparison enable control signal as provided on control line 123. During the decode cycle/$\varphi_2$ phase of the first execution of the single-instruction-loop instruction, the contents of the PC register 60 are held in response to the single-instruction-loop-in-progress signal to allow the beginning-of-loop address to be pushed onto the PC stack 66 rather than read. Thereafter, on a single-instruction-loop compariter 120 comparison match, the single instruction loop-in-progress control signal is provided to the sequence control logic block 56 during the instruction fetch cycle of what must be the single program segment instruction. This permits the sequence control logic block 56 to copy the beginning-of-loop instruction address back from the PC stack 66 through the stack address latch 68 and on to the IABUS 28 in response to the instruction fetch cycle/$\varphi_2$ phase copy and load control signals provided on the control lines 116, 83, respectively. Thus, for the duration of the single instruction loop, the provision of the single instruction loop compariter and the operation of the sequential control logic block 56 permit the instruction address of the single program segment instruction to be placed on the IABUS 28 during each instruction cycle.

### III. Branch Execution

The present invention further permits the execution of conditional and nonconditional, direct and indirect JUMP instructions as a means of program branch structure management. A simple direct, unconditional JUMP instruction has the effect of directly altering the execution point address of the program; the new or destination address being directly specified by the JUMP instruction. Conditional JUMP instructions provide a decision point capability by permitting the branch to occur or not occur based on the status result of a prior executed instruction. An indirect JUMP instruction permits the new execution point address to be determined by the data produced by the execution of prior instructions.

### A. Direct Jump Execution

The present invention permits the execution of JUMP instructions by the provision of a control latch 210 and a data latch 212. An unconditional, direct JUMP instruction, as decoded by the decoder 22, provides a loop disable control signal, latched onto control line 46 for the duration of the decode cycle and a decode cycle/$\varphi_1$ phase no operation instruc-tion select control signal provided on the instruction multiplexer select control line 20. The decoded destination address of the JUMP instruction is then provided by the decoder 22 onto the control bus 50 for latching into the control latch 210 in response to a decode cycle/$\varphi_2$ load control signal. The destination address is thus provided by the control latch 210 onto the IABUS 28, via a control latch output lines 214, at the beginning of the next instruction fetch cycle. The concurrent decode cycle of the instruction fetched during the decode cycle of the JUMP instruction is effectively voided by the force execution of a no operation instruction. Thus, following the execution of a direct, unconditional JUMP instruction, the next instruction address of an instruction actually executed is that specified as part of the JUMP instruction.

### B. Conditional Jump Execution

The execution of a conditional, direct JUMP instruction is dependent on the state of the boolean condition status signal provided to the sequence control logic block 56 via the conditional status control line 31. The condition status signal is preferably generated as a consequence of a prior executed instruction. During the decode cycle of the conditional JUMP instruction, the state of the condition signal is tested by the sequence control logic block 56. If the condition tests true then the execution of the conditional JUMP instruction is completed identically to that of an unconditional JUMP instruction. However, should the condition test false, then the sequence control logic block 56 effectively withholds the decode cycle/$\varphi_2$ phase load control signal from the control latch 210 and provides instead the decode cycle/$\varphi_2$ phase load control signal to the program counter register 60 on its load control line 72. Thus, where the decision point condition tested is false, the conditional direct JUMP instruction is effectively ignored and the program control logic unit 12 proceeds with the in-line sequential provision of instruction addresses.

### C. Indirect Jump Execution

The execution of indirect JUMP instructions differs from that of the direct conditional and unconditional JUMP instructions in that a data-dependent JUMP destination execution point address is utilized. The data latch 212 may be provided with a data value as a result of data processing instructions executed prior to the execution of the indirect JUMP instruction. Thus, during the decode cycle of an indirect JUMP instruction, either conditional or unconditional, the data-dependent value stored by the data latch 212 may be provided onto the IABUS 28, via the connecting lines 214 in response to a decode cycle/$\varphi_2$ data latch output enable signal provided on the data latch control line 216. Preferably, the enable signal on control line 216 is provided only in the cases where an unconditional, indirect JUMP instruction is executed when a conditional, indirect JUMP instruction is executed with the condition control signal being tested as true.

In accordance with the present invention, execution point address branches are supported in combination with the execution of multiply-nested loop program segment instructions. That is, JUMP instructions may reside within loop program segments and specify branch destination instruction addresses that are either within the current nest level program segment or exclusively, relative to the current nest level program segment, within an encompassing loop program segment. Where both branch source and destination addresses of a JUMP instruction are associated with the same nest level of a single multiply-nested loop, the presence of the JUMP instruction has no significant impact on the management of multiply-nested loops. However, when a branch destination address has a nest level count value one less than that of the branch source address, a JUMP out-of-loop will occur upon execution. Preferably all allowable JUMP out-to-loop conditions proceed forward in the execution of the program such that the destination addresses are always greater than the branch source addresses. When a branch out of loop occurs, the condition is detected by the end-of-loop compariter 96 by comparing the current end-of-loop instruction address as present in the end-of-loop register 92 with the current instruction address provided on the IABUS 28. Since the current instruction address will be the branch destination address, the end-of-loop compariter 96 will provide a jump out-of- loop control signal on one of the lines 118 to the sequence control logic block 56 in response to a decode cycle/$\varphi_1$ compariter enable signal as provided on the control line 112. In response, the sequence control logic block 56 will provide the necessary control signals to pop the beginning-of-loop instruction address corresponding to the aborted loop from the top of the PC stack 66, restore the now current nest level end-of-loop instruction address, from the top of the end-of-loop stack 94 through the end-of-loop multiplexer 90, to the end-of-loop register 92, the now current nest level iteration count value from the iteration stack 130 to the iteration counter 128 via the interation multiplexer 126 and, finally, decrement the now current program segment relative count and absolute nest level count values of counters 162, 168, respectively. Thus, restoration of these loop management parameters occurs within the $\varphi_2$ phase of the decode the cycle in the execution of the branch destination instruction substantially in the same manner as when a iterative loop completes its last iteration. Restoration of the next level of loop management parameters will again occur in each succeeding $\varphi_2$ phase until the current end-of-loop instruction address or the absolute next level count value is reduced to 300.

### IV. Subroutine Execution

The present invention further provides for the implementation of CALL and RET instructions for subroutine program structure management. The CALL instruction, when executed, performs an unconditional, direct or indirect branch to a CALL instruction destination instruction address. Preferably, this destination instruction address corresponds to the first instruction of a subroutine program segment. Thus, immediately following the execution of the CALL instruction, the instructions of the subroutine program segment are sequentially executed until a RET instruction is finally executed. The effect of executing a RET instruction is that the execution point address of the program is returned to the instruction address immediately following that of the CALL instruction. By providing that the CALL instruction, when executed, establishes this RET destination instruction address, the execution of any subroutine program segment may be initiated by any of several relatively randomly located CALL instructions.

### A. Direct CALL and RET

The CALL and RET instructions primarily utilize the PC stack 66 for the temporary storage of the RET destination address. Preferably, in the execution of a CALL instruction, the PC address incrementor 70 and PC register 60 combine to provide the sequentially incremented next instruction address on the IABUS 28 in response to the instruction fetch cycle/$\varphi_2$ phase load control signal on control line 72. As the CALL instruction is decoded, the sequence control logic block 56 provides a decode cycle/$\varphi_1$ phase load control signal to an instruction address latch 62 via a control line 63. Thus, the destination address of the eventual RET instruction is obtained. This RET destination instruction address is selected onto PC stack input lines 80 from the PC stack multiplexer 64 in response to a decode cycle/$\phi_2$ phase select control signal on the level sensitive select control line 79. A push of the RET destination instruction address onto the PC stack 66 is then performed in response to a decode cycle/$\phi_2$ push control signal on the push/pop control line 114.

Also during the decode cycle of the CALL instruction, the decoder 22 provides the CALL instruction destination address onto the control bus 50. The CALL instruction destination address is ultimately latched into the control latch 210 and onto the IABUS 28 in response to a decode cycle/$\phi_2$ phase load control signal provided on the load control line 218.

Due to the preferred pipelined operation of the microsequencer 10, the CALL instruction destination address is not available until the beginning of the execution of the second instruction following the CALL instruction. Consequently, a no operation instruction is forced as the instruction effectively fetched in the execution of the intervening instruction. That is, a CALL instruction decode cycle/$\phi_2$ phase select control signal is provided on the level sensitive control line 20 of the instruction multiplexer 19. Thus, the leading edge decode cycle/$\phi_1$ load control signal, corresponding to the intervening instruction and as provided on the control line 25 of the instruction latch 23, results in the forced provision of the no operation instruction to the decoder 22. Meanwhile, the microsequencer 10 proceeds to fetch the instruction corresponding to the CALL destination instruction address as provided from the control latch 210. Consequently, there is a single instruction cycle delay between the fetch cycle execution of a CALL instruction and that of the destination address instruction at the CALL destination address.

The execution of instructions beginning at the CALL destination instruction address continues sequentially until concluded by the execution of a RET instruction. A RET instruction decode cycle/$\phi_1$ phase pop control signal is provided to the PC stack 66 on its push/pop control line 114. This causes the instruction address present at the top of the PC stack 66 to be output onto the PC stack output lines 82 to the stack address latch 68. Assuming that equal numbers of push and pop operations have affected the PC stack 66, the popped instruction address obtained in the execution of a RET instruction corresponds to that left by the execution of the previous CALL instruction. This RET destination instruction address is latched into the stack address latch 68 and onto the IABUS 28 in response to a decode cycle/$\phi_2$ phase load control signal provided on the load control line 83.

As before, an instruction will have been fetched during the decode cycle of the RET instruction. Consequently, a no operation instruction is forced by the appropriate control of the instruction multiplexer 19 during the decode cycle of the RET instruction. The next instruction executed corresponds to the instruction address placed on the IABUS 28 by the stack address latch 68. Again, only a single instruction cycle delay has been incurred in returning from the execution of a subroutine segment.

In accordance with the present invention, the execution of CALL instruction may themselves be nested, and, further, intermixed with the execution of all other instructions including LOOP and JUMP instructions. Consistent with the foregoing, the present invention further provides a nest level stack 164 coupled to the output lines 182 of the nest level counter 162. Further provided is a nest level count value multiplexer 160 that is coupled to the nest level count stack 164 for returning nest level count values popped from the nest level count stack 164 to the nest level counter 162 via the nest level stack output lines 164 and nest level count value multiplexer output lines 180. An alternate selectable input to the nest level count value multiplexer 160 is a forced zero count provided on the input lines 172. In the execution of a CALL instruction, the forced zero count value is selected by the nest level count value multiplexer 160 in response to a decode cycle/$\phi_2$ phase select control signal provided on the level-sensitive input select control line 176. The forced zero count value is loaded into the nest level counter 162 in response to a decode cycle/$\phi_2$ phase load control signal provided on the load input control line 177. At the same time, a decode cycle/$\phi_2$ phase push control signal is provided to the nest level count stack 164 on the push/pop input control line 184. Thus, the current program relative nest level count value is saved onto the nest level count stack 164 prior to the beginning of subroutine program segment execution. Thus, as the nest level counter 162 is provided with a zero program relative nest level count, all program structure management information setup prior to the execution of the CALL instruction is retained though effectively disabled. That is, the presence of a zero nest level count value in the nest level counter 162 results in loop-in-progress control signal being withheld from the sequence control logic block by the nest level compariter 166.

The absolute nest level count value of the program control logic unit 12, however, has been further increased by 1 by virtue of the execution of the CALL instruction. Consequently, a decode cycle/$\phi_2$ phase increment control signal is provided to the absolute nest level counter 168 via the increment/decrement input control line 188. The absolute nest level compariter 170 may then provide, if appropriate, the maximum nest level equal to or exceeded control signals to the sequence control logic block 56. Notably, until this condition occurs, LOOP and CALL instructions may be executed in any combination and any order consistent with their execution as described previously.

Execution of a RET instruction returns the execution point address to the program segment relative nest level of the CALL instruction. Preferably then, if the absolute nest level count value is non-zero, the CALL instruction corresponding program segment relative nest level count value is popped from the nest level count value stack 162 in response to a decode cycle/φ2 phase control signal on a pop level sensitive control input via push/pop control lines 184. At the same time, the nest loop count value multiplexer 160 is selected for the transfer of the popped nest level count value from the nest level count stack output lines 174 to the nest level counter 162 in response to the decode cycle/φ2 phase level sensitive select input on control line 176. Finally, the nest level counter 162 is loaded with the nest level count value in response to the decode cycle/φ2 phase load control signal input on line 177. As a potentially non-zero nest level count value is then present in the nest level counter 162, depending on whether there are pending loops, a loop-in-progress control signal may be provided to the sequence control logic block 56 by the nest level comparater 166. Any pending loops are thereby effectively reactivated.

### B. Interrupt Service Routine Execution

The occurrence of an interrupt is initially detected by the interrupt controller 11. Conventionally, each potentially interrupting event source is separately connected to the interrupt controller 11. Consequently, the interrupt controller may readily identify the source of the interrupting event and provide a corresponding interrupt vector instruction address onto the IABUS 28. However, prior to providing the interrupt vector, the interrupt controller 11 preferably first determines whether the interrupt is generally allowable and, if so, provides the interrupt control signal to the microsequencer 10 via the interrupt control singal line 30. So informed, the microsequencer 10 withholds its next sequentially-generated instruction address, thereby permitting the interrupt vector address to control the selection of the instruction fetched from the instruction memory store 16.

Preferably, the execution of an interrupt branch is substantially analogous to the execution of a CALL instruction distinguished only in that the source of the branch destination instruction address is the interrupt controller 11 rather than the decoder 22 and control latch 210. The instruction address of the instruction that would have been executed absent the occurrence of the interrupting event is pushed onto the PC stack 66 during the fetch cycle in the execution of the first interrupt service program segment subroutine. Simultaneously, a zero nest level count value is forced, by operation of the nest level count value multiplexer 160, in the nest level count value counter 162 while the previous nest level count value is pushed onto the nest level count value stack 164. Finally, the absolute nest level count value maintained by the absolute nest level counter 168 is incremented.

The interrupt service program segment subroutine is not unlike any other subroutine executable in response to the execution of a CALL instruction. That is, the interrupt service program segment subroutine may itself contain CALL and LOOP instructions in any order and combination. The internal service subroutine ultimately ends with the sequentially-obtained execution of a RET instruction. Consequently, the RET destination instruction addresses is popped from the PC stack 66 and provided onto the IABUS 28 while the previous nest level count is restored from the nest level count value stack 164 to the nest level counter 162 and the absolute nest level count value within the absolute nest counter 168 is decremented. Consequently, the execution point address of the program is returned to the instruction address from which the interrupt branch occurred and execution then proceeds sequentially therefrom.

### C. Indirect Call and Return

Similar to the unconditional indirect JUMP instruction, the present invention provides for the data-dependent selection of any one of several program segment subroutines in the execution of a single CALL instruction. Preferably, the prior execution of data processing instructions provides a resultant data value that is latched into the data latch 212. In the execution of a subsequent indirect CALL instruction, the immediately subsequent instruction address, as present on the IABUS 28 during the decode cycle of the CALL instruction, is passed from instruction address latch 62, through the PC stack multiplexer 64, and onto the top of the PC stack 66 in response to a decode cycle/φ2 phase push control signal provided on the push/pop control line 114. At the same time, the current program segment relative nest level count value is pushed onto the nest level stack 164 in response to a decode cycle/φ2 phase push control signal provided on the push/pop control line 184 while a forced zero count value is latched into the nest level counter 162 by the appropriate selection of the forced zero input of the nest level count value multiplexer 160. A decode cycle/φ2 phase increment control signal is also provided to the absolute nest level counter 168 via the increment/decrement control line 188. Since a pipelined instruction fetch cycle executes concurrently with the instruction decode cycle of the indirect CALL instruction, the decoding of the CALL instruction by the decoder 22 provides for a no operation instruction being selected through the instruction multiplexer 19 and latched in the instruction latch 23 as the next instruction to be decoded. Finally, the data-dependent value latched into the data latch 212 is provided onto the IABUS 28, as the next instruction address, via the lines 214 in response to a CALL instruction decode cycle/φ2 phase output enable control signal provided on the data latch control lines 216. Consequently, the next instruction fetched corresponds to that specified by the data-dependent value previously generated.

### V. Loop Disable Control

In order to permit the relatively free use of program structure management instructions within loop program structures, the present invention provides for loop disable control under certain conflict program structure management situations. In particular, the management of loop program structures, as provided by the present invention, enables the testing of the end-of-loop/out-of-loop, last iteration and loop pending control signals, provided by the end-of-loop compariter 96, iteration compariter 132 and nest level count value compariter 166, during every instruction cycle/φ₁ phase. As previously described, this permits the sequence control logic block 56 to direct the necessary loop management by either modifying the execution point address of the program to the beginning-of-loop instruction address or to terminate the current nest level loop program structure. Significantly, conflict situations will occur whenever the next to last instruction in a loop program segment is any of the CALL and JUMP instructions. Additionally, a conflict situation arises when an interrupt is handled in place of the execution of the last instruction of a LOOP program segment.

With respect to both calls and interrupts, the destination instruction address of the eventual RET instruction must be pushed onto the PC stack 66 preferably during the φ₂ phase of the CALL instruction decode cycle or the fetch cycle of the first instruction of an interrupt service routine. The present invention provides for the decoder 22 to provide the loop disable control signal immediately upon determining that the instruction provided to it for decoding is a CALL instruction. Accordingly, the loop disable control signal is issued as a decode cycle/φ₁ phase control signal to the sequence control logic block 56. Preferably then, the sequence control logic block 56 is inhibited from performing beginning-of-loop restart or end-of-loop termination procedures at least until the CALL destination instruction address is placed on the IABUS 28. Preferably, the program management procedures associated with the execution of the CALL instruction, however, are not inhibited. Thus, in addition to providing the RET instruction destination address on the top of the PC stack 66, the current program segment relative nest level count value is pushed onto the nest count value stack 164 and the absolute nest level count value is incremented by the counter 168. The otherwise normal execution of a RET instruction properly restores these values. In particular, the RET destination instruction address is provided on the IABUS 28 as necessary to fetch the last instruction of the loop program segment. Consequently, all of the necessary end-of-loop program management procedures are performed without possibility of conflict.

The occurrence of an interrupt, similar to the CALL instruction, provides for the pushing of a RET instruction destination address onto the PC stack 66 during the φ₂ phase of the fetch cycle for the interrupt vector corresponding instruction. Provision of the interrupt control signal on control line 30 to the sequence control logic block 56 effectively performs the same function as the loop disable control signal. The sequence control logic block 56 is effectively inhibited from implementing the beginning-of-loop restart or end-of-loop termination procedures that would otherwise be performed. However, the program management procedures for implementing the interrupt vector call are not inhibited. Consequently, the execution point address shifts to the interrupt service routine and, on the ultimate execution of a RET instruction, is returned to the instruction address of the last loop program segment instruction. As the program segment relative nest level count value is returned to the nest level counter 162 during the execution of the RET instruction, the sequence control logic block 56 receives the loop-in-progress, last-iteration and end-of-loop control signals during the φ₁ phase of the instruction fetch cycle. The sequence control logic block 56 is thus free to implement the necessary beginning-of-loop restart or end-of-loop termination control procedures in accordance with the otherwise ordinary management of the last loop program segment instruction.

Finally, the decoder 22 will provides the decode cycle/φ₁ phase loop disable control signal upon decoding any one of the JUMP instructions. The sequence control logic block 56 will be accordingly inhibited from implementing beginning-of-loop restart or end-of-loop termination procedures at least until the execution of the JUMP instruction has caused the JUMP destination address to be placed on the IABUS 28. Thereafter, the sequence control logic block 56 is freed to determine whether a jump to the end or out of the current loop program segment has occurred by examining the end-of-loop and out-of-loop control signals. Any necessary loop program structure management procedures are then implemented by the sequence control logic block 56.

The handling of a conditional JUMP instruction is the same as for all other JUMP instructions when the boolean condition state is such that the conditional JUMP destination address becomes the new execution point address. In addition, however, the next sequential instruction address must be conserved in case the boolean condition state is such that no jump occurs. In accordance with the present invention, the loop disable control signal is provided during φ₂ of the JUMP instruction decode cycle to inhibit any pending loop program structure management. Simultaneously, the boolean condition state is tested, the next sequential instruction address is provided to the PC register 60 from the PC incrementor 70, the JUMP destination address is provided to the control latch 210 and a no operation instruction is selected for decoding during the next instruction cycle. Depending on the boolean condition state, either the next sequential instruction address or the JUMP instruction destination address is latched into its respective latch 60, 210 and onto IABUS 28 in response to a decode cycle/φ₂ phase load control signal. At approximately the same time the decoder 22 withdraws the loop disable control signal and begins to decode the previously fetched NOP instruction. The instruction fetched during the NOP decode cycle and, therefore next effectively executed, corresponds to the instruction address provided on the IABUS 28.

Where the boolean condition state is such that the jump is not taken, the sequence control logic block 56 is enabled by the absence of the loop disable control signal to perform the necessary loop program structure management procedures during the φ₂ phase of the NOP instruction decode cycle. Alternately, any necessary loop program structure management procedures are performed during the φ2 phase of the fetch instruction cycle in the fetching of the instruction at the JUMP instruction destination address.

Thus, the present invention provides a microsequencer capable of high-speed execution of a code-efficient program through the use of overhead-free multiply-nested iterative loop, call and conditional branching program structures all in an environment subject to the relatively random occurrence of multiple interrupts while maintaining data integrity.

It should be understood that the foregoing disclosure naturally relates only to the preferred embodiments of the present invention. Many modifications and variations of the present invention are possible and may be readily made therein without departing from the scope and nature of the present invention as set forth in the appended claims.

## Claims

1. Apparatus for providing execution point addresses in the execution of a program including nested program segments of one or more program instructions, said apparatus comprising:

   a) sequencer means for generating successive execution point addresses, said sequencer means including branch control means for providing a branch address to said sequencer means as a generated execution point address and for receiving a condition input; and

   b) nest control means, responsive to said sequencer means, for detecting changes in the effective segment nest level of the execution point address and for providing a corresponding condition input to said branch control means.

2. The apparatus of Claim 1 further comprising:

   a) first stack means, responsive to said sequencer control means, for storing branch instruction address pointers; and

   b) second stack means, responsive to said nest control means, for storing data corresponding to the effective segment nest level of the execution point address.

3. The apparatus of Claim 2 wherein said nest control means comprises means for determining the absolute segment nest level of said execution point address.

4. The apparatus of Claim 3 wherein said branch control means comprises loop means for performing end-of-loop instructionless loops.

5. Apparatus for providing execution point addresses in the execution of a program including nested program segments of one or more program instructions, said apparatus comprising:

   a) sequencer means for generating successive execution point addresses, said sequencer means including branch control means for providing a branch address to said sequencer means as a generated execution point address, said branch control means being responsive to a condition input; and

   b) nest control means, responsive to said sequencer means, for detecting changes in the effective segment nest level of the execution point address and for providing a corresponding condition input to said branch control means.

6. The apparatus of Claim 5 wherein said branch control means comprises:

   a) means for storing a loop ending address pointer;

   b) means for storing a loop iteration value; and

   c) means for comparing said loop iteration value with a predetermined value and for effectively comparing said loop ending address pointer with the execution point address.

7. The apparatus of Claim 6 wherein said branch control means further comprises loop stack means for retrievably storing loop ending address pointers and corresponding loop iteration values, said branch control means storing and retrieving loop ending pointers and corresponding loop iteration values in response to segment nest level changes as detected by said nest control means.

8. The apparatus of Claim 7 wherein said nest control means further comprises nest stack means for retrievably storing segment nest level corresponding values.

9. Apparatus for controlling the execution point address of a program having instructions provided at corresponding addresses and grouped into a plurality of program segments, said apparatus comprising:

   a) sequencing means for altering the execution point address of said program;

   b) means for storing a nested segment count value; and

   c) means, responsive to said sequencing means, for adjusting said nested segment value on program segment nest level changes of the execution point address.

10. The apparatus of Claim 9 further comprising:

   a) first stack means for retrievably storing a plurality of execution point address pointers;

   b) second stack means for retrievably storing a plurality of nested segment count values; and

   c) means for the ordered storage and retrieval of said an execution point address pointer and said nested segment count value to or from said first stack means and said second stack means, respectively, in response to the execution of an instruction at the execution point address.

11. The apparatus of Claim 10 wherein aid sequencing means comprises:

a) means for storing a pointer to a segment ending address;

b) means for storing a segment iteration count value; and

c) means for effectively comparing the execution point address with said segment ending address pointer and for comparing said stored iteration count value with a predetermined value.

12. The apparatus of Claim 11 further comprising:

a) second stack means for retrievably storing a plurality of segment ending address pointers;

b) third stack means for retrievably storing a plurality of segment interation count values; and

c) means for the ordered storage and retrieval of said an execution point address pointer and said nested segment count value to or from said second stack means and said third stack means, respectively, in response to an instruction at the execution point address.

13. The controller of Claim 9 wherein said sequencing means comprises:

a) first means for determining the completion of a nest segment;

b) second means for comparing the number of iterations of said nest segment with a predetermined number; and

c) means, responsive to said first and second means, for altering the execution point address to the corresponding beginning address of said nest segment.

14. The controller of Claim 13 wherein said first means comprises:

a) means for storing an address pointer to the last program instruction of a corresponding nest segment; and

b) means for comparing the execution point address that referenced by the address pointer stored by said storing means.

15. Apparatus for programmable processing of control and data signals in accordance with a predetermined sequence of instructions, said apparatus comprising:

a) means for storing a plurality of program instructions at a corresponding plurality of program addresses;

b) means for selectively fetching program instructions; and

c) an instruction address sequencer unit including means for the over-head free nestable loop sequencing of instruction addresses.

16. The apparatus of Claim 15 wherein said nestable loop sequencing means comprises:

a) means for storing a first pointer to a predetermined initial instruction of a loop sequence of said instructions;

b) means for storing a second pointer to a predetermined terminal instruction of said loop sequence of said instructions; and

c) means for iteratively modifying an iteration count value corresponding to the cumulative loop performance of said loop sequence of said instructions.

17. The controller of Claim 16 further comprising:

a) first means for buffering a plurality of said first pointers;

b) second means for buffering a plurality of said second pointers; and

c) third means for buffering a plurality of said iteration count values.

18. The controller of Claim 17 wherein said first, second and third buffering means are further characterized as LIFO buffers.

19. The controller of Claim 18 wherein said pointer of said second means is further characterized as being relative to said predetermined initial instruction.

0221741

FIG. 2

FIG. 1

FIG. 3